# EUROPÄISCHE PATENTSCHRIFT

(11) **EP 0 854 059 B1**
(45) Veröffentlichungstag und Bekanntmachung des Hinweises auf die Patenterteilung: **09.06.2004**
(21) Anmeldenummer: 97120265.0
(22) Anmeldetag: 19.11.1997
(51) Int. Cl.: B60J 3/02

(54) **Sonnenblende für Fahrzeuge**
Sun visor for vehicles
Pare-soleil pour véhicules.

(30) Priorität: 17.12.1996 DE 19652495
(43) Veröffentlichungstag der Anmeldung: 22.07.1998
(73) Patentinhaber: Johnson Controls Interiors GmbH & Co. KG, 42285 Wuppertal (DE)
(72) Erfinder: Eple, Pascal, 70160 Stromy (FR); Jacquemin, Didier, 70300 Luxeuil Les Bains (FR)

(56) Entgegenhaltungen:
- EP-A- 0 193 150
- EP-A- 0 202 398
- EP-A- 0 472 788
- EP-A- 0 695 659
- DE-A- 4 038 172
- DE-U- 1 774 661
- DE-U- 1 840 799
- FR-A- 1 253 893
- US-A- 3 122 393
- US-A- 5 230 546

## Beschreibung

Die Erfindung bezieht sich auf eine Sonnenblende für Fahrzeuge mit einem aus einem dünnen Plattenkörper und einer peripherischen Rahmenleiste bestehenden Sonnenblendenkörper, einer Lagerachse und einem Lagerböckchen.

Die heute üblicherweise zum Einsatz kommenden Sonnenblenden für Fahrzeuge weisen einen relativ großvolumigen Sonnenblendenkörper mit hohem Gewicht und komplizierten Aufbau auf. Bei einer ersten üblichen Ausführungsart wird an einem zumeist aus einem Drahtrahmen bestehenden Einlagekörper zunächst ein Lagerkörper für die Lagerachse angeschweißt. Auf den Einlagekörper werden sodann beidseitig Kunststoffschaum-Zuschnitte gelegt und darauf Kunststoff-folien-Zuschnitte, die randumlaufend miteinander verschweißt werden. Bei einer anderen üblichen Ausführungsart wird ein mit einem Lagerkörper ausgerüsteter Drahtrahmen in das Formnest einer Schäumform eingelegt und mit PU, neuerdings auch mit EPP umschäumt. Dieser Rohling wird dann mit Kunststoffolien oder Textilmaterial-Zuschnitten umkleidet.

Aus der EP 0 695 659 A2 ist eine Sonnenblende für ein Fahrzeug bekanntgeworden mit einer am Fahrzeug befestigbaren Halteeinheit und einer an der Halteeinheit angeordneten Blendschutzeinheit, die bevorzugt zwischen Fahrer- und Beifahrer-Sonnenblende angeordnet ist und die zu Zwecken des Lichtschutzes umklappbar ist. Dabei ist vorgesehen, daß die Blendschutzeinheit einteilig als im wesentlichen geschlossene, zumindest bereichsweise vorhandene Hohlprofileinheit ausgebildet ist. Die Blendschutzeinheit soll im wesentlichen über die gesamte Flächenkontur als Hohlprofileinheit ausgebildet sein und aus thermoplastischem Kunststoff bestehen und nach dem Gas-Innen-Druck-Verfahren hergestellt sein.

Der vorliegenden Erfindung liegt hiernach die Aufgabe zugrunde, eine Sonnenblende der eingangs genannten Art zur Verfügung zu stellen, deren Sonnenblendenkörper einfach und preiswert herzustellen ist, den ästhetischen Ansprüchen vollauf genügt und der sich darüber hinaus dadurch auszeichnen soll, daß er ein nur äußerst geringes Gewicht aufweist.

Zur Lösung dieser Aufgabe ist erfindungsgemäß vorgesehen, daß der Sonnenblendenkörper aus einem einstückigen Kunststoff-Spritzgußteil aus thermoplastischem Kunststoff mit einem dünnen massiven Plattenkörper und einer damit einstückig und materialeinheitlich verbundenen, rohrförmig ausgebildeten und einen kreisringförmigen Querschnitt aufweisenden Rahmenleiste besteht, wobei der innerhalb der Rahmenleiste ausgebildete Hohlraum nach dem Gasinnendruck-Verfahren hergestellt ist und mit einer Lageröffnung für die Lagerung der Lagerachse versehen ist und wobei sowohl die peripherische Rahmenleiste als auch der dünne Plattenkörper mit einer genarbten Oberfläche ausgebildet ist.

Unter einem dünnen Plattenkörper soll ein solcher verstanden werden, dessen Wandstärke gegenüber herkömmlichen Sonnenblendenkörpern um mindestens 50 - 75 % und unter Umständen mehr verringert ist. Ein solcher Plattenkörper kann sehr leichtgewichtig sein und bedarf keiner darin einzulagernden Einlage, denn seine Halterung wird von der ihn tragenden peripherischen Rahmenleiste übernommen. Die Rahmenleiste sollte hingegen in ihren Dickenabmessungen in etwa einer herkömmlichen Sonnenblende angepaßt sein, damit sie von Hand richtig ergriffen werden kann und auch den Stabilitätsansprüchen genügt. Die erfindungsgemäße Sonnenblende läßt sich mit einem Sonnenblendenkörper zur Verfügung stellen, der so leicht ausgebildet ist, daß auf das Anformen einer sonst üblichen Hilfslagerachse verzichtet werden kann. Damit entfällt auch die Herstellung, Bereitstellung und Montage eines sonst üblichen Gegenlagerböckchens. Der Sonnenblendenkörper besteht danach aus einem einstückigen Kunststoff-Spritzgußkörper und besitzt damit eine aus einem Stück bestehende, zudem auch materialeinheitliche Ausbildung, die noch dadurch vervollkommnet ist, daß die Außenflächen des Plattenkörpers genarbt ausgeführt sind, was durch eine entsprechende Bearbeitung des Spritzgießwerkzeugs problemlos realisiert werden kann. Es versteht sich von selbst, daß bei einem derart ausgebildeten Sonnenblendenkörper auf eine Verkleidung desselben mit Kunststoff-Folien- oder Textilmaterial verzichtet werden kann.

Ein Ausführungsbeispiel der Erfindung wird nachfolgend anhand der Zeichnung näher erläutert, und es zeigt:

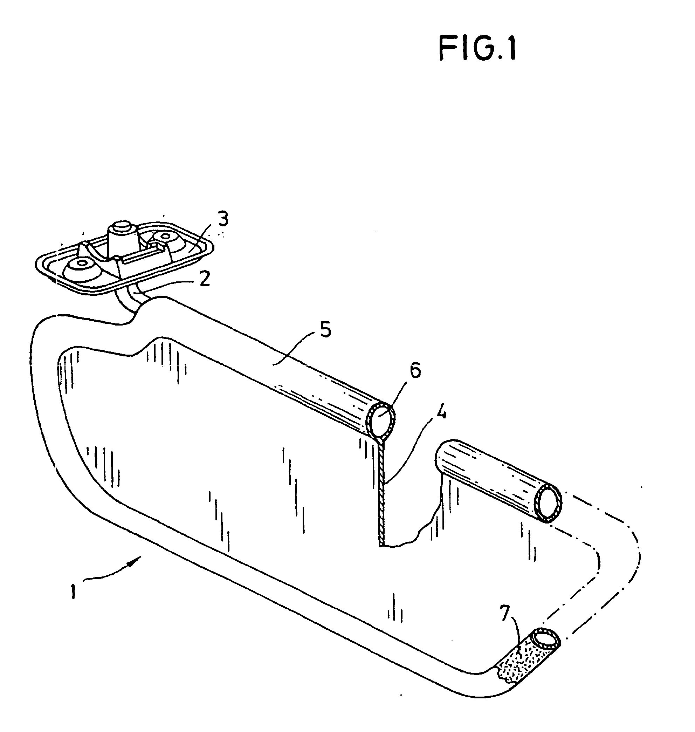

Fig. 1 eine erfindungsgemäß ausgebildete Sonnenblende.

Die neue Sonnenblende besteht aus einem Sonnenblendenkörper 1, einer darin mit einem Endbereich eingreifenden Lagerachse 2 und einem Lagerböckchen 3, das den anderen Endbereich der Lagerachse 2 aufnimmt und in gewohnter Weise an einer Fahrzeugkarosserie befestigbar ist.

Der Sonnenblendenkörper 1 besteht aus einem dünnen Plattenkörper 4 und einer den Plattenkörper 4 tragenden peripherischen Rahmenleiste 5. Während der Plattenkörper 4 massiv ausgebildet ist, besitzt die Rahmenleiste eine hohle Ausbildung nach Art eines Rundrohrs.

Der Sonnenblendenkörper 1 ist einstückig und materialeinheitlich ausgebildet und besteht aus einem Kunststoff-Spritzgußteil. Im Innern der peripherischen Rahmenleiste 5 ist, wie erwähnt und aus der Zeichnung ersichtlich, ein Hohlraum 6 vorhanden. Hergestellt wird der Sonnenblendenkörper 1 im Kunststoff-Spritzgußverfahren und in bezug auf die Rahmenleiste 5 nach dem Gasinnendruck-Verfahren, bei dem über einen Gasinnendruck-Injektor in eine Öffnung, die mit der Lageröffnung für die Lagerachse 2 zusammenfallen sollte, innerhalb der Form ein Gas eingedrückt wird, so daß im Innern des in der Form befindlichen erwärmten thermoplastischen Kunststoffmaterial sich der Hohlraum 6 ausbilden kann. Gleichzeitig erfolgt mit dem Eindrücken des Gases die Ausbildung der äußeren Form der Rahmenleiste 5. Bei der Formgebung wird zumindest die Rahmenleiste 5, bevorzugt aber auch der Plattenkörper 4 mit einer Narbung 7 versehen.

## Patentansprüche

1. Sonnenblende für Fahrzeuge mit einem aus einem dünnen Plattenkörper (4) und einer peripherischen Rahmenleiste (5) bestehenden Sonnenblendenkörper (1), einer Lagerachse (2) und einem Lagerböckchen (3), **dadurch gekennzeichnet, daß** der Sonnenblendenkörper (1) aus einem einstückigen Kunststoff Spritzgußteil aus thermoplastischem Kunststoff mit einem dünnen massiven Plattenkörper (4) und einer damit einstückig und materialeinheitlich verbundenen, rohrförmig ausgebildeten und einen kreisringförmigen Querschnitt aufweisenden Rahmenleiste (5) besteht, wobei der innerhalb der Rahmenleiste (5) ausgebildete Hohlraum (6) nach dem Gasinnendruck-Verfahren hergestellt ist und mit einer Lageröffnung für die Lagerung der Lagerachse (2) versehen ist und wobei sowohl die peripherische Rahmenleiste (5) als auch der dünne Plattenkörper (4) mit einer genarbten Oberfläche ausgebildet ist.

## Claims

1. Sun visor for vehicles having a sun visor body (1) which is composed of a thin panel body (4) and a peripheral frame strip (5), and having a bearing spindle (2) and a small bearing bracket (3), **characterized in that** the sun visor body (1) consists of a single-piece injection-moulded plastic part consisting of thermoplastic with a thin, solid panel body (4), and a frame strip (5) which is connected to the panel body integrally and is of the same material, is of tubular design and has a circular cross section, the cavity (6) formed within the frame strip (5) being produced by the internal gas pressure process and being provided with a bearing opening for the mounting of the bearing spindle (2), and both the peripheral frame strip (5) and the thin panel body (4) being designed with an embossed surface.

## Revendications

1. Pare-soleil pour véhicules comprenant un corps de pare-soleil (1) se composant d'un corps de plaque mince (4) et d'une tige de cadre périphérique (5), un axe de support (2) et un support de palier (3), **caractérisé en ce que** le corps de pare-soleil (1) se compose d'une pièce moulée par injection de plastique d'une pièce en matière plastique thermoplastique avec un corps de plaque mince massif (4) et une tige de cadre (5) connectée à celui-ci d'une pièce et en le même matériau, réalisée avec une forme tubulaire et présentant une section transversale circulaire, l'espace creux (6) réalisé à l'intérieur de la tige de cadre (5) étant fabriqué conformément à un procédé de pression interne de gaz et étant pourvu d'une ouverture de support pour le support de l'axe de support (2) et la tige de cadre périphérique (5) ainsi que le corps de plaque mince (4) étant réalisés avec une surface grainée.
